# EUROPÄISCHE PATENTANMELDUNG

(11) **EP 4 613 443 A1**
(43) Veröffentlichungstag der Anmeldung: **10.09.2025**
(21) Anmeldenummer: 25159786.0
(22) Anmeldetag: 25.02.2025
(51) Int. Cl.: B25J 9/16, B25J 13/08

(54) **GREIFVORRICHTUNG, HANDHABUNGSSYSTEM UND VERFAHREN ZUM HANDHABEN VON STÜCKGÜTERN**

(30) Priorität: 06.03.2024 DE 102024106475
(71) Anmelder: Körber Supply Chain Logistics GmbH, 78467 Konstanz (DE)
(72) Erfinder: Fischer, Marco, 78462 Konstanz (DE); Skrdlant, Rolf-Peter, 88662 Überlingen (DE); Huber, Richard, 78467 Konstanz (DE); Eisser, Dirk-Udo, 78479 Reichenau (DE); Schulze, Oliver, 88662 Überlingen (DE)
(74) Vertreter: Müller Schupfner & Partner Patent- und Rechtsanwaltspartnerschaft mbB (Muc)

(57) **Zusammenfassung**

Es wird eine Greifvorrichtung (1) zum Handhaben von Stückgütern (2), insbesondere zum Einsatz bei einem Sortierprozess, bereitgestellt. Die Greifvorrichtung (1) umfasst ein Greifelement (3), das dazu ausgestaltet ist, ein Stückgut (2) zu handhaben; einen Aktuator (4), der dazu ausgestaltet ist, das Greifelement (3) zu bewegen auszurichten; zumindest einen Sensor (5), der dazu ausgestaltet ist, die durch das Stückgut (2) auf das Greifelement (3) wirkende Kraft zu ermitteln und als Kraftinformation auszugeben; und eine Steuereinheit (6), die dazu ausgestaltet ist, den Aktuator (4) so zu steuern, dass das Stückgut (2) basierend auf der Kraftinformation im Raum ausgerichtet und/oder bewegt wird. Ferner wird ein Handhabungssystem (10) zum Handhaben von Stückgütern (2) und ein Verfahren zum Handhaben von Stückgütern (2) bereitgestellt.

## Beschreibung

Die vorliegende Erfindung betrifft eine Greifvorrichtung zum Handhaben von Stückgütern, insbesondere zum Einsatz bei einem Sortierprozess, ein Handhabungssystem zum Handhaben von Stückgütern und ein Verfahren zum Handhaben von Stückgütern.

Zur Automatisierung von Handhabungsprozessen in der Paketlogistik werden automatisierte Handhabungsvorrichtungen eingesetzt. Solche Handhabungsvorrichtungen wie beispielsweise Greifvorrichtungen, die oft als Roboter realisiert sind, können Stückgüter wie beispielsweise Pakete, Päckchen, Versandtaschen, Smalls, Transportrollen, Briefumschläge und dergleichen physisch bewegen. Die Handhabungsvorrichtungen können beispielsweise bei Sortierprozessen, Kommissionierungsprozessen oder dergleichen eingesetzt werden. Da Eigenschaften der Stückgüter (wie beispielsweise Gewicht, Massenschwerpunkt, Oberflächenbeschaffenheit und dergleichen) oft unbekannt sind, ist es schwer die Handhabungsvorrichtungen in einem optimalen Bereich oder Betriebspunkt zu betreiben. Genauer gesagt werden Stückgüter oft mit zu großem Kraftaufwand gehandhabt, um sicherzugehen, dass das Stückgut nicht abfällt.

Daher ist es eine Aufgabe der vorliegenden Erfindung, eine Greifvorrichtung und ein Verfahren zum Handhaben von Stückgütern bereitzustellen, bei dem jeweils ermöglicht wird, ein Stückgut effizient zu handhaben.

Die vorliegende Erfindung löst dieses Problem mit einer Greifvorrichtung mit dem Merkmal des Anspruchs 1, mit einem Handhabungssystem mit dem Merkmal des Anspruchs 14 und mit einem Verfahren zum Handhaben von Stückgütern mit dem Merkmal des Anspruchs 15. Vorteilhafte Weiterbildungen sind in den Unteransprüchen angegeben.

Gemäß einem Aspekt der vorliegenden Erfindung wird eine Greifvorrichtung zum Handhaben von Stückgütern, insbesondere zum Einsatz bei einem Sortierprozess, bereitgestellt. Die Greifvorrichtung kann ein Greifelement umfassen, das dazu ausgestaltet ist, ein Stückgut zu handhaben. Ferner kann die Greifvorrichtung einen Aktuator umfassen, der dazu ausgestaltet ist, das Greifelement zu bewegen und/oder auszurichten. Ferner kann die Greifvorrichtung zumindest einen Sensor umfassen, der dazu ausgestaltet ist, die durch das Stückgut auf das Greifelement wirkende Kraft zu ermitteln und als Kraftinformation auszugeben. Ferner kann die Greifvorrichtung eine Steuereinheit umfassen, die dazu ausgestaltet ist, den Aktuator so zu steuern, dass das Stückgut basierend auf der Kraftinformation im Raum ausgerichtet und/oder bewegt wird. Vorzugsweise kann ein einzelner Sensor vorgesehen sein. Dadurch kann das System vereinfacht werden. Insbesondere müssen weniger Daten verarbeitet werden, was den betrieb beschleunigt.

Gegenüber dem bekannten Stand der Technik liefert die vorliegende Erfindung den Vorteil, dass ein Stückgut an der Greifvorrichtung, so gehalten werden kann, dass ein effizienter Betrieb der Greifvorrichtung gewährleistet ist. Ferner kann durch ein Ausrichten und/oder Bewegen des Stückguts basierend auf der Kraftinformation, das Stückgut individuell gehandhabt bzw. behandelt werden. Damit wird eine Überdimensionierung bei der Handhabung des Stückgut vermieden. Eine solche Überdimensionierung kann beispielsweise dadurch auftreten, dass eine zu hohe Greifkraft (beispielsweise mechanische Greifkraft oder Ansaugkraft) verwendet wird. Ferner kann durch die Berücksichtigung von Kraftinformationen auf weitere Eigenschaften des Stückguts Rücksicht genommen bzw. eingegangen werden. Beispielsweise kann eine Veränderung des Stückguts während dem Handhabungsprozess berücksichtigt werden. Dadurch kann ein Verschleiß der Greifvorrichtung verringert werden. Genauer gesagt kann durch die Berücksichtigung der Kraftinformation das Stückgut so im Raum ausgerichtet und/oder bewegt werden, dass eine möglichst geringe Belastung auf die Greifvorrichtung wirkt. Ferner ist es möglich mit der Greifvorrichtung den Masseschwerpunkt (im Folgenden einfach als Schwerpunkt bezeichnet) des Stückguts zu bestimmen. Mit dieser Information kann das Stückgut so an der Greifvorrichtung gehalten sein, dass die geringstmögliche (d.h. die minimale) Haltekraft der Greifvorrichtung nötig ist, um das Stückgut zu halten. Ferner kann damit eine auf das Greifelement wirkende Kraft minimiert werden, wodurch die Handhabung des Stückgut vereinfacht sein kann. Ferner kann dadurch eine Effizienz des Handhabungsprozesses erhöht sein.

Die Greifvorrichtung kann eine Vorrichtung sein, die dazu ausgestaltet ist, Stückgüter wie beispielsweise Poststücke wie Pakete, Päckchen, Versandtaschen, Smalls, Transportrollen, Briefumschläge und dergleichen, physisch zu bewegen. (d.h. zu handhaben). Mit anderen Worten kann die Greifvorrichtung dazu ausgestaltet sein, ein Stückgut von einem Ursprungsort zu einem anderen Ort im Raum zu bewegen. Dazu kann die Greifvorrichtung das Stückgut ergreifen, halten und/oder bewegen. Vorzugsweise kann die Greifvorrichtung das Stückgut entgegen der Schwererichtung anheben. Dies ist beispielsweise bei Sortierprozessen von Stückgütern wie beispielsweise in einem Postzentrum vorteilhaft. Hierbei können Stückgüter abhängig von Stückgutinformationen an unterschiedliche Ziele transportiert werden. Mit anderen Worten kann ein Strom aus Stückgütern durch eine Greifvorrichtung sortiert werden, indem abhängig von Stückgutinformationen die einzelnen Stückgüter an verschiedene Positionen (abhängig von Stückgutinformationen) befördert werden. Das Greifelement kann ein Teil der Greifvorrichtung sein, das in direkten Kontakt mit dem Stückgut kommen kann. Das Greifelement kann dazu ausgestaltet sein, das Stückgut festzuhalten, sodass das Stückgut an das gewünschte Ziel transportiert werden kann. Das Greifelement kann dazu ausgestaltet sein, das Stückgut von einem Zufuhrbereich zu entnehmen oder aufzunehmen und in einem Abgabebereich abzulegen. Das Greifelement kann beispielsweise ein Funktionsende eines Roboterarms sein. Der Aktuator kann dazu ausgestaltet sein, das Greifelement zu bewegen und/oder auszurichten. Der Aktuator kann ein Motor, insbesondere ein Elektromotor, und/oder zumindest ein Gelenk umfassen. Im Falle, dass das Greifelement ein Funktionsende eines Roboterarms ist, kann der Aktuator den Roboterarm bewegen, sodass dieser eine beliebige Position im 3-dimensionalen Raum erreichen kann. Zusätzliche oder alternativ kann der Aktuator dazu ausgestaltet sein, eine Halteposition, in welcher das Stück oder das Greifelement gehalten ist, zu variieren. So kann der Aktuator das Greifelement beispielsweise drehen, kippen, neigen usw., sodass eine beliebige Ausrichtung im Raum möglich ist. Mit anderen Worten kann der Aktuator, das von dem Greifelement gehaltene Stückgut in sechs Freiheitsgraden bewegen (vor / zurück, herauf / herunter, links / rechts, gieren, nicken und rollen). Dadurch kann eine Position und/oder Ausrichtung des Stückguts im Raum frei und individuell gewählt werden. Der Sensor kann dazu ausgestaltet sein, während der Handhabung eines Stückguts eine aus der Handhabung resultierende Kraft zu ermitteln. Mit anderen Worten kann, sobald das Greifelement in Kontakt mit einem Stückgut kommt, der Sensor eine Kraft bestimmen, die aufgrund des Stückguts auf das Greifelement wirkt. Vorzugsweise kann der Sensor dazu ausgestaltet sein, während einer Bewegung und/oder Ausrichtung des Greifelements die Kraft, welche auf das Greifelement wirkt, zu bestimmen. Vorzugsweise kann der Sensor die Kraft kontinuierlich bestimmen. Vorzugsweise kann der Sensor dazu ausgestaltet sein, die auf das Greifelement wirkende Kraft, an vorbestimmten Ausrichtungen und/oder Positionen des Greifelements zu bestimmen. Beispielsweise kann der Sensor die Kraft unmittelbar nach dem ersten Kontakt zwischen Greifelement und Stückgut bestimmen. Anschließend kann der Sensor die Kraft bei einer bestimmten Ausrichtung des Greifelements im Raum bestimmen. Es kann eine Vielzahl von Positionen und/oder Ausrichtungen vorgesehen sein, die während einem Handhaben des Stückguts durch das Greifelement angefahren werden, an denen jeweils eine Kraft ermittelt wird. Jede so ermittelte Kraft kann jeweils als Kraftinformation ausgegeben werden. Dadurch kann zumindest eine Information über das Stückgut erlangt werden. Die Kraftinformation kann von dem Sensor an eine Steuereinheit ausgegeben werden. Die Steuereinheit kann eine computerähnliche Vorrichtung sein, die dazu ausgestaltet ist, Informationen aufzunehmen (Eingangsinformation), Informationen zu verarbeiten und Informationen auszugeben (Ausgangsinformationen oder Steuerbefehle). Die Steuereinheit kann die Kraftinformation als Eingangsinformation aufnehmen. Basierend auf der Kraftinformation kann die Steuereinheit Ausgangsinformationen in Form von Steuerbefehle an den Aktuator ausgeben. So kann die Steuereinheit beispielsweise prüfen, in welcher Ausrichtung und/oder Position des Greifelements, die geringste Kraft von dem Stückgut auf das Greifelement wirkt. In dieser Position ist auch gleichzeitig die geringste Kraft notwendig, um das Stückgut mit dem Greifelement zu halten und/oder zu bewegen. Mit anderen Worten kann diese Position und/oder Ausrichtung als die effizienteste Position und/oder Ausrichtung angesehen werden, in welcher das Stückgut an dem Greifelement gehalten und/oder bewegt werden kann. Es ist beispielsweise denkbar, dass die Steuereinheit dazu ausgestaltet ist, den Aktuator so zu steuern, dass nach einem Aufnehmen des Stückguts bestimmte Änderungen in zumindest einem der sechs Freiheitsgrade vorgenommen wird, und durch Messen der Kraft, die auf das Greifelement wirkt, diejenige Position und/oder Ausrichtung bestimmt werden kann, in der die geringste Kraft auf das Greifelement wirkt. Somit kann sichergestellt sein, dass das Stückgut optimal relativ zu der Greifvorrichtung ausgerichtet ist, sodass die geringste Kraft notwendig ist, um das Stückgut zu halten und/oder zu bewegen. Ein solcher Prozess kann vergleichbar sein mit einem Balancieren eines Tabletts auf mehreren Fingern. Dadurch kann ein effizientes Handhaben von Stückgütern realisiert sein. Ferner kann dadurch ein Verschleiß an der Greifvorrichtung vermindert werden. Darüber hinaus kann dadurch gerade so viel Kraft zum Halten und/oder Bewegen eines Stückguts durch das Greifelement aufgebracht werden, wie notwendig ist. Dadurch kann zum einen das Stückgut sicher an dem Greifelement gehalten sein und zum anderen vermieden werden, dass Energie verschwendet wird.

Vorzugsweise ist die Steuereinheit dazu ausgestaltet, den Aktuator so zu steuern, dass die Kraft, die auf das Greifelement wirkt, minimal ist. Mit anderen Worten kann eine Feedback-Steuerung implementiert sein, die basierend auf der Kraftinformation den Aktuator so steuert, dass die Kraft, die zwischen Greifelement und Stückgut herrscht, minimal ist. Minimal muss im vorliegenden Fall nicht unbedingt der absolut geringste Wert bedeuten. Vielmehr kann minimal bedeuten, dass unter allen aufgenommenen Kraftinformationen (beispielsweise bei einer Messung der Kraft in bestimmten Zeitabständen) die diejenige Kraft als minimal betrachtet wird, die im Vergleich zu allen anderen gemessenen Kräften die geringste ist. Dadurch kann die Effizienz des Handhabungsvorgang auf einfache Art und Weise gesteigert sein.

Vorzugsweise ist die Steuereinheit dazu ausgestaltet, den Aktuator basierend auf der Kraftinformation so zu steuern, dass des Stückgut an dem Greifelement balanciert wird. So kann beispielsweise ein Schwerpunkt des Stückguts bestimmt werden und das Stückgut auch über Kopf relativ zu der Greifvorrichtung gehandhabt werden. Beispielsweise ist es denkbar, dass während eines Balancieren des Stückguts über Kopf der Greifvorrichtung ein Ansaugen des Stückguts ausgesetzt ist. Durch Kenntnis des Schwerpunkts des Stückguts kann das Stückgut so auf das Greifelement aufgelegt werden, dass es nicht herunterfällt. Ferner können bei einem Balancieren eines Stückguts auch Beschleunigungskräfte berücksichtigt werden, die auf das Stückgut wirken. So kann das Greifelement bei einer Bewegung beispielsweise geneigt werden, um ein Herunterfallen des Stückguts bei einer Bewegung des Greifelements zu verhindern. Dadurch kann die Einsatzmöglichkeit der Greifvorrichtung gesteigert sein.

Vorzugsweise ist die Steuereinheit dazu ausgestaltet, den Aktuator basierend auf der Kraftinformation so zu steuern, dass ein Schwerpunkt des Stückguts auf einer Linie mit dem Greifelement liegt, wobei die Linie parallel zu der Schwererichtung ist. Mit anderen Worten kann in einem Fall, bei dem das Greifelement das Stückgut nicht an dem Massenschwerpunkt des Stückguts greift, ein auftretendes Moment durch die Ausrichtung des Stückgut an dem Greifelement ausgeglichen werden. Dadurch ist es möglich, den Schwerpunkt des Stückguts sowie den Schwerpunkt des Greifelements auf einer in der Schwererichtung vertikalen Linie zu platzieren. Die vertikale Linie kann dabei der Schwererichtung bzw. der Gravitationsrichtung entsprechen. Dadurch kann die Kraft, die notwendig ist, um das Stückgut zu halten, zu bewegen und/oder auszurichten minimiert sein.

Vorzugsweise ist die Steuereinheit dazu ausgestaltet, einen Schwerpunkt des Stückguts basierend auf der Kraftinformation zu bestimmen und/oder zu erlangen und basierend auf dem Schwerpunkt des Stückguts den Aktuator zu steuern. Mit anderen Worten kann ein Schwerpunkt des Stückguts auch bestimmt werden, ohne dass ein iteratives Herantasten (d. h. Messung, Korrektur, Messung, Korrektur usw.) notwendig ist. Dazu können beispielsweise mehrere Sensoren an dem Greifelement vorgesehen sein, die jeweils eine Kraftinformation an die Steuereinheit übermitteln können. Abhängig von der jeweiligen Kraftinformation sowie der Position der Sensoren an dem Greifelement, kann die Steuereinheit dann bestimmen, wo sich der Schwerpunkt des derzeit gehandhabten Stückguts befindet. Entsprechend kann sie den Aktuator so steuern, dass eine Position und/oder Ausrichtung des Stückguts direkt angefahren wird, bei der die Kraft zwischen Stückgut und Greifelement minimal ist. Dadurch kann die Zeitdauer, bis die optimale Position und/oder Ausrichtung des Stückguts erreicht ist, verringert werden, verglichen mit dem Fall, bei dem iterativ diese Position bestimmt wird.

Vorzugsweise ist die Steuereinheit dazu ausgestaltet, eine Handhabungsgeschwindigkeit des Aktuators basierend auf der Kraftinformation zu steuern. Die Handhabungsgeschwindigkeit kann die Geschwindigkeit sein, mit der die Greifvorrichtung das Stückgut von der Aufnahmeposition zu der Abgabeposition transportiert. Es kann ungefähr davon ausgegangen werden, dass die Kraft, die zwischen dem Greifelement und dem Stückgut wirkt, umso größer ist, je größer die Handhabungsgeschwindigkeit ist. Mit anderen Worten kann dies bedeuten, dass, wenn das Stückgut schnell gehandhabt wird, eine größere Haltekraft zum Halten des Stückguts notwendig ist, verglichen mit einer langsameren Handhabung. Durch Minimierung der Haltekraft, die notwendig ist, um das Stückgut an dem Greifelement zu halten durch eine durch die Steuereinheit initiierte Bewegung und/oder Ausrichtung des Stückgut, kann die Handhabungsgeschwindigkeit erhöht werden, ohne dass die Gefahr besteht, das Stückgut von dem Greifelement abfällt. Dadurch kann eine beschleunigte Handhabung realisiert sein.

Vorzugsweise ist die Steuereinheit dazu ausgestaltet, den Aktuator basierend auf einer Trägheitskraft des Stückguts zu steuern. Mit anderen Worten können beispielsweise bei hochdynamischen Bewegungsabläufen der Greifvorrichtung Trägheitskräfte, welche auf das Stückgut wirken, berücksichtigt werden, um das Stückgut in der optimalen Position und/oder Ausrichtung zu halten. Somit kann das Stückgut in Balance gehalten werden. Abhängig davon, an welche Zielposition das Stückgut durch die Greifvorrichtung transportiert werden soll, kann die Steuereinheit also Beschleunigungswerte berücksichtigen, um die optimale Position und/oder Ausrichtung des Stückguts an dem Greifelement zu bestimmen. Beispielsweise kann das Stückgut also vor und/oder während einer Bewegung des Stückguts so orientiert werden, dass eine Kraft, welche auf das Greifelement wirkt minimal ist. Somit kann das Stückgut noch effizienter gehandhabt werden.

Vorzugsweise kann die Steuereinheit dazu ausgestaltet sein, einen Neigungswinkel und/oder eine Griffstärke des Greifelements basierend auf der Kraftinformation zu bestimmen. Der Neigungswinkel kann ein Winkel einer Ebene sein, in welcher der Kontakt zwischen Stückgut und Greifelement hergestellt ist. Mit anderen Worten kann das Greifelement eine Ebene definieren, die die Grenze zwischen Greifelement und Stückgut darstellt. Diese Greifebene kann soweit schräggestellt werden (d. h. geneigt werden) bis der tatsächliche Schwerpunkt des Stückguts mittig unterhalb des Greifelements liegt und sich die Kräfte angleichen. Dadurch kann die Anzahl an Freiheitsgraden reduziert werden, sodass eine Steuerung der Greifvorrichtung vereinfacht ist. Insbesondere kann ausschließlich die Neigung variiert werden. Die Griffstärke des Greifelements kann (beispielsweise ein Unterdrucksaugern) oder eine Kraft (bei mechanischen Greifern) sein. Abhängig von dem Stückgut ist eine unterschiedliche Griffstärke notwendig, um das Stückgut zu handhaben. Beispielsweise kann ein Stückgut mit einer Anfangsgriffstärke gegriffen werden bis die Steuereinheit die erste Kraftinformation aufnimmt. Basierend darauf, kann evaluiert werden, ob die implementierte Griffstärke ausreicht, um das Stückgut sicher und effizient zu handhaben. Sollte bestimmt werden, dass die Griffstärke überdimensioniert ist, kann diese reduziert werden, um die Effizienz des Gesamtprozesses zu verbessern. Andersrum kann bei einem Bestimmen, dass die Griffstärke nicht ausreichend ist, um eine sichere Handhabung des Stückgut zu gewährleisten, die Griffstärke erhöht werden. Dadurch kann der Handhabungsprozess zuverlässig realisiert werden.

Vorzugsweise ist die Steuereinheit dazu ausgestaltet, eine Masse eines Stückguts basierend auf der Kraftinformation zu bestimmen. Mit anderen Worten kann der Steuereinheit die Orientierung und/oder Ausrichtung des Greifelements sowie die Kraftinformation zugeführt werden, woraufhin die Steuereinheit eine Masse des Stückguts bestimmen kann. Ferner kann eine solche Bestimmung selbst in der Bewegung des Stückguts erfolgen, indem die Beschleunigungswerte ebenfalls der Steuereinheit zur Verfügung gestellt werden, sodass diese die daraus resultierenden Trägheitskräfte bei der Bestimmung der Masse herausrechnen kann. Dadurch können weitere Stückgutinformationen erstellt und/oder geprüft werden, während die Greifvorrichtung das Stückgut handhabt. Ferner kann das Stückgut statt einer inhomogenen Masseverteilung eine nicht-kubische Form aufweisen. Das kann dazu führen, dass der Masseschwerpunkt nicht unterhalb einer Greiferfläche liegt. Mit anderen Worten kann eine Orientierung des Stückguts anhand des Masseschwerpunkts geschehen und nicht nur aufgrund eines geometrischen Schwerpunkts. Dadurch kann ein größeres Spektrum an Stückgütern gehandhabt werden.

Vorzugsweise kann die Steuereinheit dazu ausgestaltet sein, den Aktuator basierend auf der Kraftinformation so zu steuern, dass ein Hebelarm, der auf die Greifvorrichtung wirkt, minimiert ist. Dadurch kann ein Verschleiß der Greifvorrichtung minimiert werden. Ebenfalls kann ein zur Handhabung des Stückguts aufzuwendender Energieverbrauch minimiert sein.

Vorzugsweise ist die Steuereinheit dazu ausgestaltet, den Aktuator so zu steuern, dass durch iterative Verlagerung und/oder Umorientierung des Stückguts, die Position bestimmt wird, bei der eine Kraft, die durch das Stückgut auf das Greifelement wirkt, minimal ist. Mit anderen Worten kann die Steuereinheit dazu ausgestaltet sein, durch kontinuierliche oder punktuelle Aufnahme und Auswertung von Kräfteinformation, während einer Handhabung des Stückguts zu bestimmen, wann eine Kraft an dem Greifelement minimal ist. Damit kann eine iterative Steuerung bereitgestellt sein, um eine Orientierung des Stückguts zu bestimmen, bei der eine wirkende Kraft minimal ist.

Vorzugsweise ist der zumindest eine Sensor direkt an dem Greifelement vorgesehen. Mit anderen Worten kann die Messung direkt an dem Greifelement realisiert sein. Damit kann örtlich aufgelöst bestimmt werden, wo an dem Greifelement, welche Kraft wirkt. Beispielsweise kann ein Greifelement eine Vielzahl von Greifern aufweisen. In diesem Fall kann an jedem Greifer ein Sensor vorgesehen sein. Dadurch kann jedem Greifer eine Kraftinformation zugewiesen werden und durch die Steuereinheit entsprechend ausgewertet werden. Ferner können so auch örtliche Unterschiede an der Oberfläche von Stückgütern erkannt werden. Bei einem Vorsehen mehrerer Greifer an dem Greifelement kann beispielsweise erkannt werden, wenn an einer Stelle eine geringere Kraft wirkt, als an der anderen (beispielsweise bei Verwendung eines Vakuumgreifers). Damit kann auf unterschiedliche Oberflächen des Stückgut geschlossen werden.

Vorzugsweise ist die Steuereinheit dazu ausgestaltet, einen optimalen Greifpunkt eines Stückguts zu bestimmen, sodass bei einem Handhaben des Stückguts mit der Greifvorrichtung, die Kraft, die auf das Greifelement wirkt, minimal ist. Der Greifpunkt kann ein Punkt auf der Oberfläche des Stückguts sein, der von dem Greifelement kontaktiert werden kann. Hat die Greifvorrichtung beispielsweise ein Stückgut gegriffen und so ausgerichtet und/oder bewegt, dass eine Kraft auf das Greifelement minimal ist, kann die Steuereinheit eine Greifposition auf dem Stückgut definieren, die zu greifen ist, um die optimale Position schneller zu erreichen. Mit anderen Worten kann der optimale Greifpunkt für eine Stückgut bestimmt werden, selbst wenn das Stückgut derzeit durch das Greifelement nicht an diesem Greifpunkt gegriffen ist. Der Greifpunkt kann zur Steuerung des Aktuators verwendet werden, um das Greifelement so zu bewegen, dass die geringste Kraft zwischen Greifelement und Stückgut herrscht. Der Greifpunkt kann bei unterschiedlichen Stückgütern an unterschiedlichen Stellen sein.

Vorzugsweise kann die Steuereinheit dazu ausgestaltet sein, den optimalen Greifpunkt in einer Speichereinheit abzulegen. Genauer gesagt kann die Steuereinheit den optimalen Greifpunkt zusammen mit anderen Stückgutinformation ablegen. Der optimale Greifpunkt kann beispielsweise bei einer Klasse von Stückgütern identisch oder zumindest ähnlich sein. Daher kann der optimale Greifpunkt für eine Klasse von Stückgütern definiert und ggf. gespeichert werden. Somit kann bei erneutem Vorliegen eines bereits gehandhabten Stückguts, der Greifpunkt direkt bestimmt werden, bevor das Stückgut gegriffen wird. Dadurch kann sichergestellt sein, dass bei erneutem Auftreten des Stückguts derselben Klasse, das Stückgut an der optimalen Stelle (d.h. am optimalen Greifpunkt) gegriffen wird. Dadurch kann ein Lerneffekt bei der Steuerung der Greifvorrichtung implementiert werden, sodass bei immer wieder ähnlichen Stückgütern die Greifvorrichtung diese an derjenigen Stelle greift, die ein hocheffizientes Handhaben des Stückgütern zulässt.

Vorzugsweise ist die Steuereinheit dazu ausgestaltet, den optimalen Greifpunkt aus der Speichereinheit zu laden. Die Speichereinheit kann eine Datenbank sein, auf die die Steuereinheit Zugriff haben kann. Während eines Betriebs kann die Steuereinheit die Stückgutinformation (beispielsweise ein Bild eines Stückguts) aufnehmen und mit den Stückgutinformationen, die in der Datenbank gespeichert sind, vergleichen. Bei Auftreten einer Treffers (beispielsweise mit vorbestimmtem Abweichungsspektrum) kann der dazugehörige Greifpunkt geladen werden und der Aktuator so gesteuert werden, dass der jeweilige Greifpunkt des Stückguts direkt angefahren wird. Dadurch kann die Effizienz des Systems gesteigert werden. Somit können bei späteren Greifversuchen bereits vorab sinnvollere Greifpunkte abseits des geometrischen Schwerpunkts bestimmt werden. Somit können auch Stückgüter mit außermittigem Masseschwerpunkt problemlos gehandhabt werden.

Vorzugsweise ist die Steuereinheit dazu ausgestaltet, den Aktuator zusätzlich, basierend auf einem Bild des Stückgut zu steuern. Ein Bild des Stückgut kann dazu verwendet werden, um basierend auf den Abmessungen des Stückguts einen ersten Greifpunkt zu bestimmen. Hierbei kann beispielsweise davon ausgegangen werden, dass das Stückgut aus einem homogenen Material besteht und somit der geometrische Schwerpunkt auch der Masseschwerpunkt ist. Der Greifpunkt für ein Stückgut, kann nach dem Handhaben des Stückguts berichtigt werden und in der Speichereinheit abgelegt werden. Dadurch kann bei einem erneuten Auftauchen desselben Stückguts direkt der besser passende Greifpunkt angefahren werden. Dazu können die Stückgüter in verschiedenen Klassen klassifiziert werden und entsprechend in der Speichereinheit abgelegt werden. Der Greifpunkt kann auch als weitere Stückgutinformation in einer Datenbank gespeichert werden. Ferner kann das Bild dazu genutzt werden, zu identifizieren, ob ein Stückgut bereits in der Vergangenheit schon mal gehandhabt wurde und somit etwaige Informationen über das Stückgut vorliegen. Genauer gesagt kann anhand des Bildes des Stückguts geprüft werden, ob für das Stückgut schon eine optimale Greifposition vorhanden ist. Dadurch kann bei Auftreten von Stückgütern derselben Stückgutklasse einer Handhabung verbessert und beschleunigt werden.

Vorzugsweise umfasst der Sensor einen piezo-elektrischen Sensor, einen Entfernungssensor, einen Drucksensor, einen optischen Sensor, einen Lastschalter und/oder einen Volumenstromsensor. Der piezo-elektrische Sensor kann sich den piezo-elektrischen Effekt zunutze machen und bei einer Krafteinwirkung eine Spannung erzeugen, die wiederum gemessen wird. Der Abstandssensor kann ein Messgerät zum Ermitteln eines Abstands zwischen dem Greifelement und dem Stückgut sein. Der Abstandssensor kann dabei drei unterschiedliche Verfahren einsetzen: Die Zeit, die ein Signal benötigt, um zurückzukehren, die Intensität des zurückkehrenden Signals und/oder die Phasenänderung des zurückkehrenden Signals. Als Sensoren können Ultraschallsensoren, Infrarot-Abstandssensoren, LED-Laufzeit-Distanzsensoren und Phasenverschiebungssensoren eingesetzt werden. Der Drucksensor kann eine elektrische Ausgangsgröße als Maß für einen Druck bestimmen. Als Drucksensor kann beispielsweise ein piezo-resistiver- oder DMS-Drucksensor, ein piezo-elektrischer Drucksensor, ein Frequenz-analoger Drucksensor, einen Drucksensor mit Hallelement, ein kapazitiver Drucksensor, ein induktiver Drucksensor und dergleichen verwendet werden.

Ein optischer Sensor kann implementiert werden, um einen Unterschied zwischen hell und dunkel zu erkennen. Somit kann bestimmt werden, ob ein Stückgut an dem Greifelement angeordnet ist oder nicht. Ein Lastschalter kann angeordnet sein, um zu bestimmen, ob eine Kraft in einem bestimmten Bereich an dem Greifelement anliegt oder nicht. Der Lastschalter kann beispielsweise mit einem piezo-elektrischen Element kombiniert werden. Ein Volumenstromsensor kann dazu ausgestaltet sein, einen Volumenstrom zu einem Greifer des Greifelements zu messen, wobei dass der Greifer als ein Sauggreifer ausgestaltet ist. Dadurch kann bestimmt werden, ob ein Stückgut zufriedenstellend an dem Greifelement gehalten ist (keine Leckageströmung) oder ob das Stückgut nicht gut an dem Greifelement gehalten ist (Auftreten einer Leckageströmung). Alle diese Sensoren können dazu ausgestaltet sein, eine Kraft, die zwischen dem Greifelement und dem Stückgut herrscht, zu bestimmen oder zumindest abzuschätzen und/oder zu bestimmen, ob ein Stückgut an dem Greifelement angeordnet ist oder nicht.

Vorzugsweise umfasst die Greifvorrichtung ferner einen Kontrollsensor zur Überwachung der Funktion des zumindest einen Sensors. Der Kontrollsensor kann beispielsweise an einer anderen Position wie der zumindest eine Sensor an der Greifvorrichtung vorgesehen sein. Beispielsweise kann der Kontrollsensor einen Motorstrom des Aktuators messen. Dadurch kann bestimmt werden, ob die Kraftinformation, die von dem zumindest einen Sensor bestimmt wird, bei einer Bewegung des Stückgut realistisch ist oder nicht. Hierbei können Toleranzen berücksichtigt werden. Damit kann festgestellt werden, wenn der zumindest eine Sensor an dem Greifelement nicht ausreichend genau arbeitet. Der Kontrollsensor kann somit die Betriebssicherheit der Greifvorrichtung sicherstellen.

Vorzugsweise ist das Greifelement ein mechanisches Greifelement und/oder ein Sauggreifelement. Ein mechanisches Greifelement kann hierbei ein zangenartiges Greifelement sein, das dazu ausgestaltet ist, Stückgüter durch in Eingriff bringen zu Handhaben. Das Sauggreifelement kann dazu ausgestaltet sein, mittels Unterdruck ein Stückgut anzusaugen und zu halten, um dieses zu handhaben. Das Saugreifelement kann einen oder mehrere Greifer in Form von Saugnäpfen aufweisen, die mit Unterdruck beaufschlagbar sind. Ferner ist es denkbar, dass eine Kombination aus mechanischen Greifelement und Sauggreifelement vorgesehen ist. Ferner könnte auch ein Wechselelement, welches das mechanische Greifelement und das Sauggreifelement abhängig von Stückgutinformationen verwendet, eingesetzt werden.

Vorzugsweise umfasst das Greifelement eine Vielzahl von Greifern. Mit anderen Worten kann eine Vielzahl von einzelnen Greifern vorgesehen sein, die zusammen das Greifelement bilden. Somit können selbst schwere Stückgüter gehandhabt werden.

Vorzugsweise ist jedem Greifer zumindest ein Sensor zugeordnet, sodass eine Kraft, die zwischen dem Stückgut und der jeweiligen Greiferhöhe, bestimmbar ist. Dadurch kann ortsaufgelöst bestimmt werden, an welcher Position des Greifelement, welche Kraft wirkt.

Vorzugsweise ist der zumindest eine Sensor direkt an dem jeweiligen Greifer vorgesehen. Vorteil durch eine Messung direkt in dem Vakuumgreifer ist, dass auch unterschiedliche Ansaugkräfte durch eine inhomogene Oberfläche des Stückguts ausgeglichen werden können (beispielsweise quadratischer 2 x 2-Greifer, bei dem ein Greifer ausfällt wird zu einem asymmetrischen 3-Fach-Greifer mit stärkerer Last auf einem einzelnen Greifer). Dadurch kann immer noch zuverlässig bestimmt werden, welches die optimale Orientierung des Stückguts zum Handhaben des Stückgut ist.

Vorzugsweise sind die Greifer als Array angeordnet. Mit anderen Worten können die Greifer an dem Greifelement in einer bestimmte Form angeordnet sein, sodass eine ortsaufgelöste Bestimmung der Kräfte zwischen Stückgut und Greifelement ermöglicht ist.

Vorzugsweise ist die Steuereinheit dazu ausgestaltet, für jeden Greifer individuell eine Kraftinformation zu bestimmen, die indikativ für eine Kraft ist, welche zwischen dem Stückgut und dem jeweiligen Greifer wirkt. Dadurch ist die Möglichkeit gegeben, jeden Greifer individuell anzusteuern. So kann beispielsweise ein Greifer, welcher keinen zufriedenstellenden Kontakt mit dem Stückgut hat, nicht weiter betätigt werden, da dies Energie braucht und keine Vorteile bei der Handhabung des Stückguts liefert.

Vorzugsweise ist die Steuereinheit dazu ausgestaltet, einen oder mehrere Greifer basierend auf der Kraftinformation zu aktivieren oder zu deaktivieren. Bei Vorsehen eines Arrays von Greifern können beispielsweise bei einem Beginn der Handhabung des Stückguts lediglich einige der Greifer aktiviert sein. Liefert die Kraftinformation dann Hinweise darauf, dass die Kraft nicht ausreicht, um das Stückgut zufriedenstellend zu handhaben, so können weitere Greifer des Greifer-Arrays aktiviert werden. Genauso kann auch bei einem Feststellen, dass das Stückgut auch mit weniger Greifer gehandhabt werden kann, einige der Greifer deaktiviert werden, um Energie zu sparen. Dadurch kann ein effizientes Handhaben des Stückguts erreicht werden.

Vorzugsweise kann die Steuereinheit dazu ausgestaltet sein, zumindest einen Greifer zu deaktivieren, insbesondere kurzfristig, um die Kraftinformation zu bestimmen. Hierzu kann beispielsweise bei einem Handhaben des Stückguts ein Greifer deaktiviert werden, um die Auswirkung auf die übrigen Greifer zu bestimmen. Mit anderen Worten kann somit ein Prüfmechanismus eingesetzt werden, der bei nicht genauer Bestimmung der Kraftinformation Abhilfe schaffen kann. Beispielsweise kann es vorkommen, dass der Masseschwerpunkt des Stückgut nicht genau bestimmt werden kann (beispielsweise aufgrund eines bestimmten Systems). In einem solchen Fall können kurzfristig ein oder mehrere Greifer deaktiviert werden, um die Überbestimmtheit des Systems zu überwinden. Während der Deaktivierung eines Greifers oder mehrere Greifer können die Kraftinformation der anderen Greifer bestimmt werden, und so der Masseschwerpunkt des Stückgut bestimmt werden.

Gemäß einem weiteren Aspekt der vorliegenden Erfindung wird ein Handhabungssystems zum Handhaben von Stückgütern bereitgestellt. Das Handhabungssystem kann eine Greifvorrichtung gemäß einer der obigen Ausführungsformen umfassen. Ferner kann das Handhabungssystem eine Fördervorrichtung umfassen, die dazu ausgestaltet ist, zumindest ein Poststück zu der zumindest einen Greifvorrichtung zu fördern. Die Fördervorrichtung kann beispielsweise ein Förderband sein. Das Förderband kann dabei eine Ausgangsposition sein, von der die zumindest eine Greifvorrichtung Stückgüter aufnimmt. Ferner kann das Handhabungssystem eine oder mehrere Endstellen umfassen, die als Zielposition dienen, an welcher die Stückgüter durch die zumindest eine Greifvorrichtung zu befördern sind.

Gemäß einem weiteren Aspekt der vorliegenden Erfindung wird ein Verfahren zum Handhaben von Stückgütern bereitgestellt. Das Verfahren kann ein Handhaben eines Stückguts mit einer Greifvorrichtung mit zumindest einem Greifelement umfassen. Ferner kann das Verfahren ein Bestimmen einer Kraftinformation, welche indikativ für eine Kraft ist, die zwischen dem Greifelement und dem Stückgut wirkt, ist, umfassen. Ferner kann das Verfahren ein Anpassen der Handhabung des Stückguts, basierend auf der Kraftinformation umfassen.

Das Anpassen der Handhabung des Stückgut kann ein Bewegen und/oder Orientieren des Stückgut, welches von dem Greifelement gehalten ist, umfassen.

Gemäß einem weiteren Aspekt der vorliegenden Erfindung wird eine Verwendung der Greifvorrichtung gemäß einer der obigen Ausführungsformen bei der Handhabung von Stückgütern bereitgestellt.

Einzelne Merkmale oder Ausführungsformen können mit anderen Merkmalen oder anderen Ausführungsform kombiniert werden und so neue Ausführungsformen bilden. Vorteile und Ausgestaltungen der Merkmale und Ausführungsformen gelten analog auch für die neuen Ausführungsformen. Ausgestaltungen und Vorteile, die in Zusammenhang mit der Vorrichtung erläutert wurden, gelten analog auch für das Verfahren und andersherum.

Im Folgenden werden zu bevorzugende Ausführungsformen mit Bezug auf die beigefügten Figuren im Detail beschrieben.
- **Figur 1**: ist eine schematische Ansicht einer Greifvorrichtung gemäß einer Ausführungsform der vorliegenden Erfindung.
- **Figur 2**: ist eine Draufsicht auf ein Greifelement gemäß einer Ausführungsform der vorliegenden Erfindung.
- **Figur 3**: ist ein schematisches Ablaufdiagramm eines Verfahrens gemäß einer Ausführungsform der vorliegenden Erfindung.

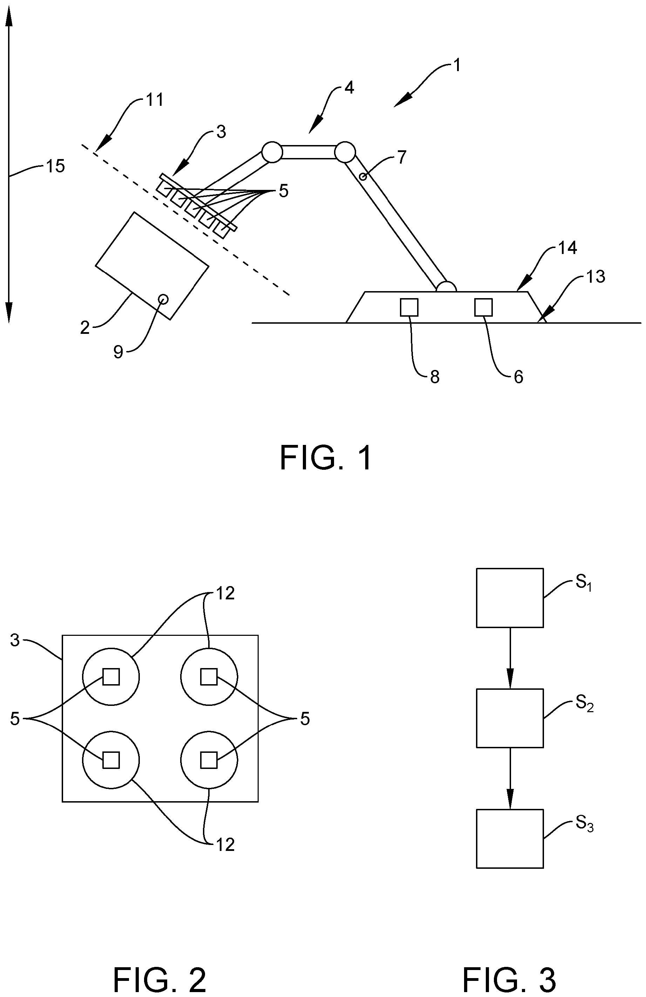

**Figur 1** ist eine schematische Ansicht einer Greifvorrichtung 1 gemäß einer Ausführungsform der vorliegenden Erfindung. Die Greifvorrichtung 1 ist bei der vorliegenden Ausführungsform eine roboterarmähnliche Vorrichtung mit einem Greifelement 3 und einem Aktuator 4. Der Aktuator 4 weist bei der vorliegenden Ausführungsform zumindest ein Gelenk sowie eine Antriebseinheit (nicht dargestellt) auf. Das Greifelement 3 weist bei der vorliegenden Ausführungsform eine Vielzahl von Sensoren 5 in Form von Unterdrucksaugern auf. Die Greifvorrichtung ist mittels einer Basis 14 auf einem Untergrund 13 fest gelagert. Die Greifvorrichtung 1 ist so frei im Raum beweglich, dass das Greifelement in allen sechs Freiheitsgraden beweglich ist. Das Greifelement 3 kann ein Stückgut 2 ansaugen und halten. Dabei wird eine Kontaktfläche zwischen dem Stückgut 2 und dem Greifelement 3 durch eine Greifebene 11 definiert. Das Greifelement 3 weist eine Vielzahl von Sensoren 5 auf, die jeweils in einem Unterdrucksauger 12 angeordnet sind. Ferner weist die Greifvorrichtung 1 einen zusätzlichen Kontrollsensor 7 auf. Der Kontrollsensor 7 ist ein zusätzlicher Sensor zur redundanten Prüfung der anderen Sensoren 5. Jeder Sensor 1 kann die jeweilige Kraft auf den jeweiligen Greifer 12 bestimmen. Diese Information (auch als Kraftinformation bezeichnet) wird der Steuereinheit 6, der Greifvorrichtung 1 zugeführt. Die Steuereinheit 6 kann dann den Aktuator 4 steuern, um das Stückgut mittels Greifelement 3 im Raum zu bewegen und/oder auszurichten. Das Stückgut 2 kann einen Schwerpunkt 9 aufweisen, der außerhalb des geometrischen Schwerpunkts liegt. Mit anderen Worten kann die Abmessung des Stückguts 2 keine Hinweise auf den Masseschwerpunkt des Stückguts 2 liefern. Die Steuereinheit kann durch die einzelnen Kraftinformationen jedes Sensors den tatsächlichen Masseschwerpunkt 9 des Stückguts 2 bestimmen. Anschließend kann die Steuereinheit 6 den Aktuator 4 so steuern, dass das Greifelement, welches das Stückgut 2 gegriffen hat, so im 3-dimensionalen Raum positioniert, dass der Schwerpunkt 9 des Stückguts 2 direkt unterhalb der Schwererichtung 15 angeordnet ist. Dadurch kann ein Hebelarm verkürzt werden.

In **Figur 2** ist eine schematische vergrößerte Ansicht eines Greifelements 3 dargestellt. In Figur 2 ist zu erkennen, dass das Greifelement 3 eine Vielzahl von Greifern 12 mit jeweils zugeordnetem Sensor 5 aufweist. Das Greifelement 3 hat also eine arrayartige Anordnung von Greifern 12. Die Steuereinheit kann die genaue Anordnung der Greifer 12 in dem Greifelement 3 sowie deren Dimensionierung kennen. Dadurch kann die Kraftinformation, welche durch die Sensoren 5 bestimmt wird, räumlich zugeordnet werden.

**Figur 3** ist ein schematisches Ablaufdiagramm eines Verfahrens gemäß einer Ausführungsform der vorliegenden Erfindung. In Schritt S1 wird ein Stückgut 2 mit der Greifvorrichtung 1 mit zumindest einem Greifelement 3 gehandhabt. Mit anderen Worten kontaktiert im Schritt S1 das Greifelement 3, das Stückgut 2. Nach dem Kontakt zwischen Greifelement 3 und dem Stückgut 2 wird in Schritt S2 eine Kraftinformation bestimmt, welche indikativ für eine Kraft ist, die zwischen dem Stückgut 2 und dem Greifelement 3 wirkt. Mit anderen Worten wird die Kraftinformation bestimmt, sobald die Handhabung des Stückguts 2 begonnen hat. In Schritt S3 wird dann die Handhabung des Stückgut 2 basierend auf der Kraftinformation angepasst.

### Bezugszeichenliste:

- 1: Greifvorrichtung
- 2: Stückgut
- 3: Greifelement
- 4: Aktuator
- 5: Sensor
- 6: Steuereinheit
- 7: Kontrollsensor
- 8: Speichereinheit
- 9: Schwerpunkt
- 10: Handhabungssystem
- 11: Greifebene
- 12: Greifer
- 13: Untergrund
- 14: Basis
- 15: Schwererichtung

## Patentansprüche

1. Greifvorrichtung (1) zum Handhaben von Stückgütern (2), insbesondere zum Einsatz bei einem Sortierprozess, umfassend:
ein Greifelement (3), das dazu ausgestaltet ist, ein Stückgut (2) zu handhaben;
einen Aktuator (4), der dazu ausgestaltet ist, das Greifelement (3) zu bewegen und/oder auszurichten;
zumindest einen Sensor (5), der dazu ausgestaltet ist, die durch das Stückgut (2) auf das Greifelement (3) wirkende Kraft zu ermitteln und als Kraftinformation auszugeben;
eine Steuereinheit (6), die dazu ausgestaltet ist, den Aktuator (4) so zu steuern, dass das Stückgut (2) basierend auf der Kraftinformation im Raum ausgerichtet und/oder bewegt wird.

2. Greifvorrichtung (1) gemäß Anspruch 1, wobei die Steuereinheit (6) dazu ausgestaltet ist, den Aktuator (4) so zu steuern, dass die Kraft, die auf das Greifelement (3) wirkt, minimal ist.

3. Greifvorrichtung (1) gemäß Anspruch 1 oder 2, wobei die Steuereinheit (6) dazu ausgestaltet ist, den Aktuator (4) basierend auf der Kraftinformation so zu steuern, dass das Stückgut (2) an dem Greifelement balanciert wird.

4. Greifvorrichtung (1) gemäß einem der vorhergehenden Ansprüche, wobei die Steuereinheit (6) dazu ausgestaltet ist, einen Schwerpunkt (9) des Stückguts (2) basierend auf der Kraftinformation zu bestimmen und/oder zu erlangen und basierend auf dem Schwerpunkt (9) des Stückguts (2) den Aktuator (4) zu steuern.

5. Greifvorrichtung (1) gemäß einem der vorhergehenden Ansprüche, wobei die Steuereinheit (6) dazu ausgestaltet ist, den Aktuator (4) so zu steuern, dass durch iterative Verlagerung des Stückguts (2) die Position bestimmt wird, bei der eine Kraft, die durch das Stückgut (2) auf das Greifelement (3) wirkt, minimal ist.

6. Greifvorrichtung (1) gemäß einem der vorhergehenden Ansprüche, wobei die Steuereinheit (6) dazu ausgestaltet ist, einen optimalen Greifpunkt eines Stückguts (2) zu bestimmen, so dass bei einem Handhaben des Stückguts (2) mit der Greifvorrichtung (1) die Kraft, die auf das Greifelement (3) wirkt, minimal ist.

7. Greifvorrichtung (1) gemäß einem der vorhergehenden Ansprüche, wobei die Steuereinheit (6) dazu ausgestaltet ist, eine Masse eines Stückguts (2) basierend auf der Kraftinformation zu bestimmen.

8. Greifvorrichtung (1) gemäß einem der vorhergehenden Ansprüche, wobei die Steuereinheit (6) dazu ausgestaltet ist, einen optimalen Greifpunkt eines Stückguts (2) zu bestimmen, sodass bei einem Handhaben des Stückguts (2) mit der Greifvorrichtung (1), die Kraft, die auf das Greifelement (3) wirkt, minimal ist.

9. Greifvorrichtung (1) gemäß einem der vorhergehenden Ansprüche, wobei der zumindest eine Sensor (5) direkt an dem Greifelement (3) vorgesehen ist.

10. Greifvorrichtung (1) gemäß einem der vorhergehenden Ansprüche, wobei das Greifelement (3) eine Vielzahl von Greifern (12) umfasst.

11. Greifvorrichtung (1) gemäß Anspruch 10, wobei die Steuereinheit (6) dazu ausgestaltet ist, für jeden Greifer (12) individuell eine Kraftinformation zu bestimmen, die indikativ für eine Kraft ist, welche zwischen dem Stückgut (2) und dem jeweiligen Greifer (12) wirkt.

12. Greifvorrichtung (1) gemäß einem der vorhergehenden Ansprüche, wobei die Steuereinheit (6) dazu ausgestaltet ist, einen oder mehrere Greifer (12) basierend auf der Kraftinformation zu aktivieren oder zu deaktivieren.

13. Greifvorrichtung (1) gemäß einem der vorhergehenden Ansprüche, wobei die Steuereinheit (6) dazu ausgestaltet ist, zumindest einen Greifer (12) zu deaktivieren, insbesondere kurzzeitig, um die Kraftinformation zu bestimmen.

14. Handhabungssystem (10) zum Handhaben von Stückgütern (2), umfassend:
zumindest eine Greifvorrichtung (1) gemäß einem der vorhergehenden Ansprüche, und
eine Fördervorrichtung, die dazu ausgestaltet ist, zumindest ein Poststück zu der zumindest einen Greifvorrichtung (1) zu fördern.

15. Verfahren zum Handhaben von Stückgütern (2), umfassend:
Handhaben eines Stückguts (2) mit einer Greifvorrichtung (1) mit zumindest einem Greifelement (3),
Bestimmen einer Kraftinformation, welche indikativ für eine Kraft ist, die zwischen dem Stückgut (2) und dem Greifelement (3) wirkt,
Anpassen der Handhabung des Stückguts (2), basierend auf der Kraftinformation.
